# EUROPEAN PATENT APPLICATION

(11) **EP 2 011 824 A1**
(43) Date of publication of application: **07.01.2009**
(21) Application number: 07741780.6
(22) Date of filing: 17.04.2007
(51) Int. Cl.: C08L 27/16, C08J 3/22, C08K 3/24, C08L 23/00, C08L 101/00

(54) **PROCESSING ASSISTANT AND MOLDING COMPOSITION**

(30) Priority: 18.04.2006 JP 2006114921
(71) Applicant: Daikin Industries, Ltd., Osaka-shi, Osaka 530-8323 (JP)
(72) Inventor: MIYAMORI, Tsuyoshi, Settsu-shi, Osaka 566-8585 (JP); KOMIYA, Yoshichika, Settsu-shi, Osaka 566-8585 (JP); ARASE, Takuya, Settsu-shi, Osaka 566-8585 (JP)
(74) Representative: HOFFMANN EITLE
(86) International application number: PCT/JP2007/058344
(87) International publication number: WO 2007/123125

(57) **Abstract**

The invention provides a polymer processing additive which, when added to a melt-processable resin, is highly effective in improving the moldability of the resin, and a molding composition containing the polymer processing additive, among others. This invention is related to a polymer processing additive comprising a fluoroelastomer subjected to heat treatment with an alkali metal inorganic salt or alkaline earth metal inorganic salt added thereto.

## Description

### TECHNICAL FIELD

The present invention relates to a polymer processing additive, a molding composition, a masterbatch of a polymer processing additive and a molded article.

### BACKGROUND ART

A so far proposed method of stabilizing and brightening melt-processable fluoropolymer resins comprises extruding the resins in the presence of an alkali metal nitrate (cf. e.g. Patent Document 1).

Also known is a method of improving the extrudability of melt-processable resins which comprises adding a fluoroelastomer as a polymer processing additive to melt-processable resins. Although the fluoroelastomer has moldability-improving effects and, thus, for example it is effective in inhibiting the occurrence of melt fracture and lowering the extrusion pressure, it is desired that such effects be further enhanced.
Patent Document 1: Japanese Kokai Publication H10-292054

### DISCLOSURE OF INVENTION

### PROBLEMS WHICH THE INVENTION IS TO SOLVE

In view of the above-discussed state of the art, it is an object of the present invention to provide a polymer processing additive which, when added to melt-processable resins, is highly effective in bringing about improvements in moldability as well as a molding composition comprising the polymer processing additive.

### MEANS FOR SOLVING THE PROBLEMS

The present invention provides a polymer processing additive comprising a fluoroelastomer subjected to heat treatment with an alkali metal inorganic salt or alkaline earth metal inorganic salt added thereto.
The present invention provides a molding composition comprising a melt-processable resin and a polymer processing additive, wherein the polymer processing additive is the polymer processing additive mentioned above.
The present invention provides a masterbatch of a polymer processing additive comprising a melt-processable resin (A) and the polymer processing additive mentioned above.
The present invention provides a molded article being the product of molding of the molding composition mentioned above.
In the following, the present invention is described in detail.

The fluoroelastomer in the polymer processing additive of the invention is not particularly restricted but may be any one known in the art provided that it is a noncrystalline fluoropolymer containing carbon atom-bound fluorine atoms and having rubber elasticity.

The fluoroelastomer generally has a first monomer-derived comonomer unit content of 30 to 80% by mass.
The term "first monomer" as used herein means a monomer from which those comonomer units accounting for a major mass fraction among all the comonomer units in the molecular structure of the fluoroelastomer are derived.

The comonomer unit so referred to herein is a moiety in the molecular structure of the fluoroelastomer and denotes a moiety derived from the corresponding monomer. For example, the vinylidene fluoride [VDF] unit is a moiety of the molecular structure of a VDF-based copolymer and is a moiety derived from VDF and is represented by -(CH₂-CF₂)-. "All the comonomer units" so referred to herein include all monomer-derived moieties in the molecular structure of the fluoroelastomer.
The comonomer unit contents can be determined by ¹⁹F-NMR measurements.

In the practice of the invention, the fluoroelastomer may be either one in which the comonomer units other than those derived from the first monomer are derived from only one monomer copolymerizable with the first monomer or one in which such comonomer units are derived from two or more monomers copolymerizable with the first monomer.

The monomer copolymerizable with the first monomer may be, for example, a fluoroolefin, a fluorovinyl ether or a hydrocarbon olefin.

The fluoroolefin is not particularly restricted but includes, for example, VDF, tetrafluoroethylene [TFE], hexafluoropropylene [HFP], 1,2,3,3,3-pentafluoropropene, chlorotrifluoroethylene [CTFE] and vinyl fluoride [VF].

The fluorovinyl ether includes , among others, perfluoro(vinyl ether) species.
The perfluoro(vinyl ether) includes, among others, perfluoro(alkyl vinyl ether) [PAVE] species.

Preferred as the PAVE are those having a perfluoroalkyl group containing 1 to 6 carbon atoms, such as perfluoro (methyl vinyl ether) [PMVE], perfluoro(ethyl vinyl ether) [PEVE] and perfluoro(propyl vinyl ether) [PPVE].
When the fluoroelastomer has PAVE units, the PAVE unit content is preferably 20 to 40% by mass based on all the comonomer units.

The hydrocarbon olefin is not particularly restricted but includes, among others, ethylene and propene; propene is preferred, however.
When the fluoroelastomer has hydrocarbon olefin units, the hydrocarbon olefin unit content is preferably 4 to 20% by mass based on all the comonomer units.

As the fluoroelastomer, there may be mentioned, for example, TFE/perfluoro(vinyl ether)-based copolymers, VDF/HFP-based copolymers, VDF/CTFE-based copolymers, VDF/TFE copolymers, VDF/HFP/TFE-based copolymers, VDF/CTFE/TFE-based copolymers, TFE/propylene-based copolymers, TFE/propylene/VDF-based copolymers, ethylene/HFP-based copolymers and like fluorocopolymers. Among them, VDF-based copolymers where the first monomer is VDF or TFE-based copolymers where the first monomer is TFE are preferred, and such VDF-based copolymers are more preferred.

More preferred as the fluoroelastomer are, among others, VDF/HFP copolymers and VDF/TFE/HFP copolymers; still more preferred are VDF/HFP copolymers.
The polymer processing additive of the invention may comprise one fluoroelastomer species or two or more fluoroelastomer species.

The fluoroelastomer generally has a number average molecular weight [Mn] of 13000 to 470000.
A preferred lower limit to the above Mn is 15000, and a preferred upper limit thereto is 320000.
The number average molecular weight, so referred to herein, is measured by carrying out gel permeation chromatography, as described later herein.

The polymer processing additive of the invention is prepared by using a fluoroelastomer subjected, with an alkali metal inorganic salt or an alkaline earth metal inorganic salt (hereinafter sometimes referred to as "specific metal inorganic salt") added thereto, to heat treatment.

The fluoroelastomer can be prepared in the conventional manner known in the art except for the addition of a specific metal inorganic salt and the subsequent heat treatment. As the steps other than the heat treatment, there may be mentioned, among others, the steps of polymerization of the above-mentioned fluoromonomer or fluoromonomers, optionally together with a fluorine-free monomer or monomers, optional post-treatment of the aqueous fluoroelastomer dispersion obtained (e.g. dilution, concentration, purification), coagulation of the aqueous fluoroelastomer dispersion or the dispersion after post-treatment, drying of the fluoroelastomer coagulum (sometimes referred to also as "crumbs") obtained in the step of coagulation, and grinding of the fluoroelastomer obtained after drying. The conditions in each step can be properly selected according to the materials to be used, the desired fluoroelastomer species and the amount thereof, among others.

As the metal constituting the specific metal inorganic salt, there may be mentioned, for example, magnesium and, further, lithium, sodium, potassium, calcium, barium and so forth.
The specific metal inorganic salt is not particularly restricted but preferably is an alkali metal nitrate or an alkaline earth metal nitrate; alkali metal nitrates are more preferred among others.

As the alkali metal nitrate, there may be mentioned, for example, sodium nitrate and potassium nitrate and, among them, potassium nitrate is preferred. The alkaline earth metal nitrate is, for example, magnesium nitrate.

It is generally preferred that the specific metal inorganic salt be added on the occasion of heat treatment in an amount corresponding to 20 to 2000 ppm by mass of the fluoroelastomer.
A preferred lower limit to the addition level is an amount corresponding to 100 ppm of the fluoroelastomer, and a preferred upper limit thereto is an amount corresponding to 1000 ppm of the fluoroelastomer.
The specific metal inorganic salt is preferably added in the form of an aqueous solution from the uniform dispersion viewpoint, although it may be added in the form of a solid as such.

The addition of the specific metal inorganic salt may be carried out in a manner such that the specific metal inorganic salt coexists with the fluoroelastomer at the point of time when the heat treatment is carried out according to the invention. When the specific metal inorganic salt is an electrolyte, it is considered preferable that the addition be made after polymerization of the fluoromonomer(s), optionally together with a fluorine-free monomer in the process of preparing the fluoroelastomer. However, (1) the salt may be added to the aqueous fluoroelastomer dispersion obtained by the polymerization, (2) the addition may be made on the occasion of such a post-treatment as dilution, concentration or purification of the aqueous fluoroelastomer dispersion, which is carried out according to need, (3) the addition may be made on the occasion of coagulation of the aqueous fluoroelastomer dispersion or the dispersion after such post-treatment as mentioned above, (4) the addition may be made on the occasion of drying the coagulum obtained by the above coagulation, (5) the addition may be made in the manner of incorporation by kneading into the fluoroelastomer after drying, or (6) the addition may be made on the occasion of preparing a masterbatch of the polymer processing additive, which is to be described later herein, using the fluoroelastomer after drying.

In the practice of the invention, the addition of the specific metal inorganic salt is preferably made on the occasion of drying (4) or kneading (5), or on the occasion of masterbatch of the polymer processing additive preparation (6) and, from the sufficient heat treatment viewpoint, it is preferably made on the occasion of drying (4).

In the case of addition on the occasion (4), the addition is preferably carried out continuously in the course of drying of the fluoroelastomer coagulum, which is to be described later herein, for attaining uniform dispersion of the specific metal inorganic salt.

The heat treatment according to the invention may be carried out on any of the occasions (1) to (6) mentioned above either simultaneously with or after the addition of the specific metal inorganic salt. From the procedural convenience viewpoint, however, it is preferably carried out on the occasion of drying (4) or masterbatch of the polymer processing additive preparation (6).

In the case of carrying out the heat treatment on the occasion (5) mentioned above, it is preferred that the elastomer after drying be ground using a grinding machine and, after addition of the inorganic salt, the mixture is melt-kneaded.

In the masterbatch of the polymer processing additive preparation (6) mentioned above, it is preferred, from the improved fluoroelastomer dispersibility viewpoint, that the specific metal inorganic salt be added to the fluoroelastomer in a form preliminarily ground after drying and the mixture be melt-kneaded with a melt-processable resin, namely the host polymer.

The ground elastomer preferably has an average particle diameter of 5 µm to 5 mm. A more preferred lower limit to the above average particle diameter is 200 µm, and a more preferred upper limit thereto is 3 mm.

The average particle diameter as reported herein is the value measured in accordance with JIS K 6891-1995. The average particle diameter (d50) is determined as follows: based on the particle diameter distribution measurement results obtained according to JIS K 6891-1995, the cumulative particle weight percentage (%) data obtained by classification are plotted against the sieve mesh opening (µm) on a logarithmic graph paper sheet, and the particle diameter at the cumulative percentage of 50% is read or, alternatively, a straight line is determined by the least squares method and the 50% particle diameter is calculated.

The heat treatment according to the invention is carried out by kneading with heating under application of a shearing force.
It is expected that the application of a shearing force in the above heat treatment makes it possible for the specific metal inorganic salt to be incorporated adequately into the fluoroelastomer and thus homogeneously dispersed in the fluoroelastomer and, when the elastomer treated is added to a melt-processable resin, a polymer processing additive excellent in dispersibility of the fluoroelastomer in the melt-processable resin can be obtained and the moldability-improving effect can be further enhanced.

The shearing force resulting from kneading can be exerted, for example, by feeding to an extruder, for example a twin-screw extruder, and extruding.

When the drying step after coagulation of the fluoroelastomer is carried out using an extruder, the procedure for applying heat and a shearing force can be carried out on the occasion of kneading of the fluoroelastomer in that extruder while adding the specific metal inorganic salt, or that procedure can also be carried out on the occasion of kneading of the fluoroelastomer in an extruder, such as a twin-screw extruder, for the masterbatch preparation to be described later herein, by kneading the specific metal inorganic salt with the elastomer.
The conditions in each procedure can be properly selected according to the composition and amount of the heat treatment target dispersion or coagulum and other factors.

Generally, the temperature for the above heat treatment may be within a temperature range within which the fluoroelastomer will not undergo thermal degradation; preferably, it is 120 to 200°C. Amore preferred lower limit to the above temperature is 140°C, and a more preferred upper limit thereto is 180°C.
The heat treatment is carried out generally for 2 to 20 minutes, preferably for 5 to 10 minutes.

The polymer processing additive of the invention may further contain, in addition to the fluoroelastomer after the above-mentioned heat treatment, an additive or additives, for example an partitioning agent. When an partitioning agent is added, the particles resulting from grinding of the fluoroelastomer can be prevented from caking and, when the polymer processing additive of the invention is added to a melt-processable resin, the dispersibility of the fluoroelastomer particles can be further improved.

The partitioning agent is not particularly restricted but includes, among others, plasticizers such as dioctyl phthalate and diglycidyl phthalate; fillers such as talc, graphite and silica; colorants such as titanium oxide, iron oxide and molybdenum oxide; acid acceptors such as magnesium oxide, calcium oxide and lead oxide; heat stabilizers such as calcium stearate and magnesium stearate; and surfactants such as polyethylene glycol and polycaprolactone.
Fillers are preferred as the partitioning agent, and talc, calcium carbonate and the like are more preferred.

The amount of the partitioning agent in the polymer processing additive of the invention can be properly selected according to the fluoroelastomer species and the amount thereof and other factors but, generally, the amount is 1 to 15 parts by mass per 100 parts by mass of the fluoroelastomer and the amount is preferably as small as possible.

The amount of the partitioning agent to obtain the minimum required effect is more preferably not smaller than 2 parts by mass, still more preferably not smaller than 4 parts by mass, and more preferably not greater than 10 parts by mass, per 100 parts by mass of the fluoroelastomer.

The polymer processing additive of the invention can be used by adding a melt-processable resin.
The polymer processing additive of the invention is excellent in dispersibility in melt-processable resins and, for example on the occasion of molding of a melt-processable resin, it can be dispersed in the form of fluoroelastomer particles having an average particle diameter of about 2 µm in the melt-processable resin even if the polymer processing additive is in a roughly ground form with a size of 1 mm to 5 mm, whereas when it is in a finely ground form with a size not smaller than 10 µm but smaller than 1000 µm, it can be dispersed in the melt-processable resin as polymer processing additive particles with an average particle diameter of about 1 µm. Hence, the latter finely ground form is preferred.

On the other hand, the fluoroelastomer having no experience of the above-mentioned heat treatment, even when used in the form of a finely divided material, may sometimes allow dispersion, in the melt-processable resin, of fluoroelastomer particles with an average particle diameter of about 3 to 10 µm according to the extruder capacity.
Therefore, it is thought that the polymer processing additive of the invention can readily produce the moldability-improving effect intrinsic in the fluoroelastomer to a sufficient extent as compared with the conventional polymer processing additive.

The polymer processing additive of the invention, which comprises the fluoroelastomer after experience, together with an alkali metal salt or alkaline earth metal salt added thereto, of the above-mentioned heat treatment, is superior in the effect of improving the moldability of melt-processable resins as compared with the conventional polymer processing additives and, in the case of extrusion processing, for instance, it allows the extrusion pressure to be lowered and melt fracture to disappear in a short period of time as compared with the fluoroelastomer having the same copolymer composition but containing no such inorganic salt as mentioned above.
Therefore, the polymer processing additive of the invention is very useful as a material for use in molding compositions and in masterbatches of polymer processing additives.

The molding composition of the invention comprises a melt-processable resin and the above-mentioned polymer processing additive of the invention.
The term "melt-processable resin" as used herein means a polymer for which the melt flow can be measured at temperatures higher than the crystallization temperature in accordance with ASTM D-1238 and D-2116.

The melt-processable resin is not particularly restricted but is preferably a fluorine-free resin. Thus, for example, it includes, among others, polyolefin resins such as polyethylene and polypropylene; polyamide [PA] resins such as nylon 6, nylon 11, nylon 12, nylon 46, nylon 66, nylon 610, nylon 612 and nylon MXD6; polyesters such as polyethylene terephthalate [PET], polybutylene terephthalate [PBT], polyarylates, aromatic polyesters (including liquid crystal polyesters) and polycarbonates [PCs]; polyacetal [POM] resins; polyether resins such as polyphenylene oxide [PPO], modified polyphenylene ethers and polyetheretherketones [PEEKs]; polyamideimide [PAI] resins such as polyaminobismaleimide; polysulfone type resins such as polysulfones [PSFs] and polyethersulfones [PESs] ; vinyl polymers such as ABS resins and poly-4-methylpentene-1 (TPX resins); and, further, polyphenylene sulfide [PPS], polyketonesulfides, polyetherimides and polyimides [PIs]. The above-mentioned nylon MXD6 is a crystalline polycondensate obtained from metaxylenediamine [MXD] and adipic acid.
Among them, polyolefin resins and PA resins are preferred as the melt-processable resin; polyolefin resins are more preferred.

The melt-processable resin in the molding composition is preferably a thermoplastic resin in view of its ready moldability.
In the molding composition of the invention, the melt-processable resin may comprise one single component or a combination of two or more components.

The melt-processable resin is preferably one having a melt-processing temperature of 100 to 350°C. The melt-processable resin may have crystallinity or no crystallinity.

In the case of its having crystallinity, the melt-processable resin preferably has a melting point of 80 to 300°C, more preferably a melting point of 100 to 200°C.
In the case of its having no crystallinity, the melt-processable resin is preferably almost equivalent in processing temperature to the crystalline melt-processable resin for which the melting point range is given above.

The melt-processable resin can be composed by those methods well known as in the past, among others, according to the type thereof.
The melt-processable resin may be in the form of a powder, granules or pellets, for instance. Pellets are preferred since they make it possible to efficiently melt the melt-processable resin in the molding composition obtained and disperse the polymer processing additive therein.

In the molding composition of the invention, the heat-treated fluoroelastomer contained in the polymer processing additive preferably amounts to 0.001 to 5% by mass relative to the sum of the total mass of the melt-processable resin and the mass of the fluoroelastomer.
The fluoroelastomer more preferably amounts to not less than 0.01% by mass and not more than 0.5% by mass relative to the sum of the total mass of the melt-processable resin and the mass of the fluoroelastomer.

The molding composition may be one prepared by adding the polymer processing additive of the invention as such to the melt-processing resin or one prepared by adding the polymer processing additive in the form of a masterbatch of the polymer processing additive, which is to be described later herein, to the melt-processable resin.
The molding composition of the invention may comprise, together with the above-mentioned polymer processing additive and melt-processable resin, one or more other components incorporated therein according to need.

The other components are not particularly restricted but include, among others, reinforcing agents such as glass fibers and glass powders; stabilizers such as minerals and flakes; lubricants such as silicone oils and molybdenum disulfide; pigments; electroconductive materials such as carbon black; impact resistance improving agents such as rubbers; and other additives listed on the positive list made up as a self-regulatory standard by the Japan Hygienic Olefin and Styrene Plastics Association.

The masterbatch of the polymer processing additive of the invention comprises a melt-processable resin (A) and the polymer processing additive of the invention. The masterbatch of the polymer processing additive of the invention can be suitably used as a polymer processing additive on the occasion of molding the melt-processable resin (A).

The masterbatch of the polymer processing additive of the invention contains the fluoroelastomer uniformly dispersed in the melt-processable resin (A) and, therefore, when added to a melt-processable resin on the occasion of molding thereof, can improve the moldability thereof, reducing the extrusion torque or extrusion pressure, for instance.

As the melt-processable resin (A) , there may be mentioned the same melt-processable resins as enumerated above. Among them, polyolefin resins are preferred, and polyethylene is more preferred.

Generally, the polymer processing additive particles in the masterbatch of the polymer processing additive of the invention preferably have an average particle diameter of 0.01 to 10 µm, more preferably 0.1 to 2 µm.

It does not matter whether the masterbatch of the polymer processing additive of the invention is in the form of a powder, granules, pellets or the like. Pellets prepared by melt-kneading are preferred, however, in view of the fact that the heat-treated fluoroelastomer is maintained in a finely dispersed state in the melt-processable resin (A).

In the masterbatch of the polymer processing additive of the invention, the fluoroelastomer preferably amounts to a proportion exceeding 0.5% by mass but not higher than 20% by mass based on the sum of the mass of the melt-processable resin (A) and the mass of the fluoroelastomer since the melt molding to be described later herein is then facilitated.

A more preferred lower limit to the content of the fluoroelastomer is 1% by mass of the above-mentioned sum of the masses, a still more preferred lower limit is 2% by mass, and a more preferred upper limit is 10% by mass.

The masterbatch of the polymer processing additive of the invention may comprise, together with the above-mentioned polymer processing additive and melt-processable resin (A), one or more other components incorporated therein according to need.
The other components are not particularly restricted but there may be mentioned, for example, those enumerated above referring to the molding composition of the invention.

While the masterbatch of the polymer processing additive of the invention can also be obtained by kneading, at a temperature of 100 to 350°C, a mixture prepared by adding the polymer processing additive-constituting fluoroelastomer and the above-mentioned inorganic salt, optionally together with an partitioning agent and/or the like, to the melt-processable resin (A), the one obtained by kneading a mixture prepared by adding the polymer processing additive prepared in advance to the melt-processable resin (A) at such a temperature as mentioned above is preferred from the viewpoint of the dispersibility of the fluoroelastomer.

The above-mentioned masterbatch of the polymer processing additive is readily dispersible in melt-processable resins and, therefore, the molded/processed articles obtained are homogeneous and such appearance defects as gel-like lumps hardly appear in cast films or blown films.

The molded article of the invention is a product of molding of the above-mentioned molding composition of the invention.
The molding may be carried out by preliminarily preparing the molding composition of the invention and then feeding the same to a molding machine for melting and extrusion, for instance, or by feeding the above-mentioned polymer processing additive and a melt-processable resin simultaneously to a molding machine for melting and extrusion, for instance, or by simultaneously feeding the above-mentioned masterbatch of the polymer processing additive and melt-processable resin to a molding machine for melting and extrusion, for instance.

The method of molding of the molding composition is not particularly restricted but there may be mentioned, for example, extrusion, injection molding and blow molding. For effective utilization of the moldability mentioned above, however, extrusion is preferred among others.

Various conditions in carrying out the molding are not particularly restricted but can be properly selected according to the composition and amount of the molding composition to be used, the shape and size of the desired molded articles and other factors.
The molding temperature is generally at a level not lower than the melting point of the melt-processable resin in the molding composition but lower than the temperature which is the lower of the respective decomposition temperatures of the polymer processing additive and melt-processable resin and is within the range of 100 to 350°C.
In the case of extrusion, the molding temperature is sometimes referred to as "extrusion temperature".

The molded article of the invention may have various shapes, for example sheet-like, film-like, rod-like, pipe-like and fibrous shapes.
The field of application of the molded article is not particularly restricted but, according to the melt-processable resin species, the molded article is suitably used, for example, in the fields where mechanical properties and dynamical properties and/or surface properties, in the main, are strongly demanded.

As the uses of the molded article, there may be mentioned, for example, various films, bags, covering materials, containers for drinks and like eating/drinking utensils, cables, pipes, fibers, bottles, gasoline tanks and other various industrial moldings.

### EFFECTS OF THE INVENTION

The polymer processing additive and masterbatch of the polymer processing additive of the invention, which have the respective constitutions described hereinabove, are more effective in reducing the extrusion pressure, inhibiting melt fracture and thus improving the moldability as compared with the conventional ones. The molding composition of the invention, which comprises the polymer processing additive mentioned above, is excellent in moldability, and the molded article of the invention, which is the product of molding of the molding composition mentioned above, is excellent in mechanical properties and other dynamic properties.

### BEST MODES FOR CARRYING OUT THE INVENTION

The following examples and comparative examples illustrate the present invention in further detail. These examples and comparative examples are, however, by no means limitative of the scope of the invention.
The amounts given in each example and each comparative example are on the mass basis unless otherwise specified.

The measured values described in each example and each comparative example are values determined by the following respective methods.

### 1. Copolymer composition

### Measurements were made using a ¹⁹F-NMR spectrometer

### (Bruker model AC300P).

### 2. Number average molecular weight

Measurements were made by carrying out gel permeation chromatography under the following conditions:
Measuring apparatus: LS-8000 (product of TOSOH Corporation) Column: TSK guard column HXL-H (TSK gel G4000HXL, TSK gel G3000HXL, TSK gel GMHXL-H)
- Detector: differential refractometer
- Developing solvent: tetrahydrofuran
- Measurement temperature: 35°C
- Sample concentration: 5 g/L
- Standard samples: various monodisperse polystyrene species = 1.14 (Max), TSK standard POLYSTYRENEs, products of TOSOH Corp.

### 3. Extrusion pressure

Measurements were made using a pressure measuring apparatus (product of Dynisco Japan, Ltd.) under the extrusion conditions mentioned later herein.

### 4. Melt fracture

The incidence of melt fracture was determined by the following procedure.
- At each observation time, the blown film was sampled and converted to a flat film by incision along a line.
- The state of the occurrence of melt fracture all over in the radial direction in blowing was regarded as 100% width, the width of the occurrence of melt fracture was measured at each measurement time using a tape measure and the incidence was calculated as the ratio to the 100% width.
   The time at which the incidence of melt fracture for the first time became 0% was recorded as the time of complete disappearance of melt fracture.

### Example 1

A fluoroelastomer [FKM] (vinylidene fluoride [VDF]/hexafluoropropylene [HFP] copolymer, copolymer composition (mole ratio): VDF/HFP = 79/21, number average molecular weight 83000) was prepared by polymerization and the crumbs obtained after coagulation was transferred to a twin-screw extruder (TEM75; product of TOSHIBA MACHINE Co.) and dried by extrusion under the following conditions.

(Extrusion conditions)
(1) Temperatures: cylinder temperature 150 to 180°C, die temperature 150°C
(2) Number of screw revolutions: 100 rpm

During this drying, a 20% aqueous solution of KNO₃ was fed to the extruder and an FKM/KNO₃ composition was obtained. The KNO₃ treatment concentration was equal to an amount corresponding to 400 ppm of the mass of FKM after drying.

The FKM/KNO₃ composition obtained was ground on a cutter type grinding mill (Rapid R1528, product of KAWATA MFG Co.) to give a roughly ground FKM-based composition with an average particle diameter of 1 to 3 mm.
A 40-g portion of the roughly ground FKM-based composition was covered with 4 g of talc to give a polymer processing additive. The polymer processing additive obtained was blended, by tumbling, with 1956 g of low-density polyethylene [LDPE] (LDPE SUMIKATHENE G201, MFR = 2, product of SUMITOMO POLYETHYLENE) so that the FKM might amount to 2% by mass of the resin; and the mixture was fed to a twin-screw extruder (KZW15TW-60MG, product of TECHNOVEL CORP.) to give a masterbatch of the polymer processing additive.

(Extrusion conditions)
(1) Temperatures: 180 to 210°C, die temperature 210°C
(2) Number of screw rotations: 600 rpm
(3) L/D: 60

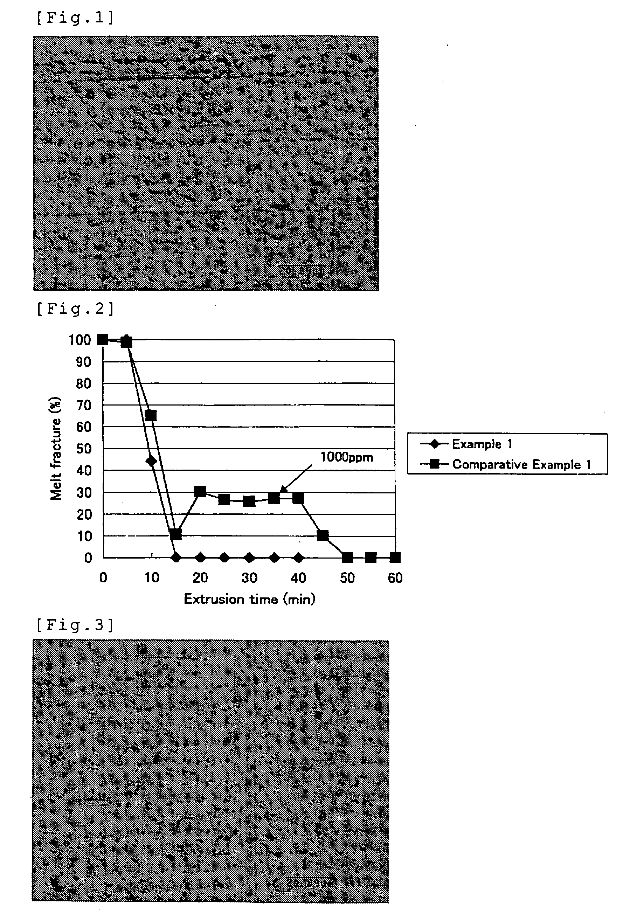

The fluoroelastomer was found dispersed as particles with an average particle diameter of 1 to 2 µm in the masterbatch of the polymer processing additive (cf. Fig. 1).
Further, the masterbatch of the polymer processing additive was evaluated for extrudability in blown film manufacture according to the following procedure.

1. A single-screw extruder (Tanabe Plastics Machinery model VS30-26 extruder, L/D: 26, screw diameter: 30 mm) equipped with an tubular die (product of Tanabe Plastics Machinery; die diameter 60 mm, die gap 0.5 mm) was fed with metallocene-catalyzed linear low-density polyethylene [metallocene LLDPE] (product name: Evolue SP2520, product of PRIME POLYMER Co.) for an about 1 hour of continuous extrusion under the conditions specified below and it was confirmed that the extrusion pressure was stably about 38 MPa, without changes, and the blown film extruded showed the occurrence of melt fracture all over the surface thereof.

### (Extrusion conditions)

(1) Temperatures: cylinder temperature C1 (120°C), C2 (130°C), C3 (130°C), C4 (140°C), die temperature (150°C)
(2) Number of screw revolutions: 50 rpm
(3) Take-off speed: 5 m/minute

2. Then, the above-mentioned metallocene LLDPE and the masterbatch of the polymer processing additive were weighed so that the amount of FKM after mixing might amount to 500 ppm; they were placed in a polyethylene bag and mixed up by tumbling. The molding composition obtained was fed to the hopper of the above-mentioned extruder. Immediately after feeding of the molding composition, the observation of changes in extrusion pressure was started.

The time required for the metallocene LLDPE remaining in the extruder to be discharged was about 5 minutes after the start of the feeding mentioned above and, after the lapse of about 5 minutes following the above feeding, the extrusion pressure began to lower and the incidence of melt fracture began to decrease. After 20 minutes following the start of the feeding, melt fracture was no longer observed at all and the extrusion pressure dropped from 38.0 MPa to 36.0 MPa.
The extrusion pressure observation was carried out continuously for 40 minutes.
The melt fracture measurement results are shown in Fig. 2.

After the above extrudability evaluation, the above extruder was purged with a mixture of the above-mentioned metallocene LLDPE and 1% by mass of talc and then purged with the metallocene LLDPE fed alone. In each purging run, the extrusion was extruded continuously for about 4 hours under the same conditions as in the extrudability evaluation and, after confirmation of the extrusion pressure to the original level, the purging run was finished.

### Example 2

To a fluoroelastomer [FKM] (vinylidene fluoride [VDF]/hexafluoropropylene [HFP] copolymer, copolymer composition (mole ratio): VDF/HFP = 78/22, number average molecular weight 64000) was added a 20% by mass aqueous solution of KNO₃ in an amount such that the treatment concentration might correspond to 250 ppm of FKM, and the mixture was subjected to heat treatment in the manner of extrusion/drying under the same conditions as in Example 1, and an FKM/KNO₃ composition was obtained. The FKM/KNO₃ composition obtained was ground on a cutter type grinding mill (Rapid R1528, product of KAWATA MFG Co.) to give a roughly ground FKM-based composition with an average particle diameter of 1 to 3 mm. The roughly ground FKM-based composition was further ground on a disk type pulverizer to give an FKM-based powder composition with an average particle diameter of 500 µm. A polymer processing additive was prepared by covering 100 parts of the FKM powder with 10 parts of talc.

A masterbatch of the polymer processing additive was prepared in the same manner as in Example 1 except for the above procedure, and subjected to extrudability evaluation. At about 6 minutes after the start of feeding of the molding composition, the extrusion pressure began to drop and the incidence of melt fracture began to decrease. At 15 minutes after the start of the above feeding, no more melt fracture was found at all and the extrusion pressure dropped from 38.2 MPa to 35.6 MPa.
The extrusion pressure and melt fracture incidence measurement results are shown in Table 1.
The fluoroelastomer in the masterbatch of the polymer processing additive was found dispersed as particles with an average particle diameter of about 1 µm.

### Example 3

The same FKM crumbs as used in Example 1 were transferred, without addition of the aqueous solution of KNO₃, to the extruder and dried. This FKM was ground on a cutter type grinding mill (Rapid R1528, product of Kawata Mfg Co.) to give roughly ground FKM with an average particle diameter of 1 to 3 mm. A 50-g portion of this roughly ground FKM and a solution of 0.025 g of KNO₃ in 2 ml of pure water were placed in a glass container (container attached to the mixer mentioned below), which was mounted on a mixer (MILLSER IFN-300DG; product of IWATANI) ; the mixture was blended up in the glass container at ordinary temperature (23°C) for 1 minute, whereby an FKM/KNO₃ composition was obtained.

A 40-g portion of the thus-obtained KNO₃-treated FKM was covered with 4 g of talc, and the whole was blended with 1956 g of LDPE (LDPE SUMIKATHENE G201, MFR = 2, product of SUMITOMO POLYETHYLENE) by tumbling so that the FKM content might amount to 2% by mass. The resulting mixture was fed to a twin-screw extruder (2D-25S, product of TOYO SEIKI) with high-shear screws incorporated therein to give a masterbatch of the polymer processing additive.

### (Extrusion conditions)

(1) Temperatures: 170 to 200°C, die temperature 200°C
(2) Number of screw rotations: 100 rpm
(3) L/D: 25

A molding composition was prepared by weighing an amount of the masterbatch of the polymer processing additive obtained sufficient to give an FKM content of 500 ppm in the composition and incorporating the same into metallocene LLDPE (product name: Evolue SP2520, product of Prime Polymer Co.), and the molding composition was fed to the hopper of the above-mentioned extruder for extrudability evaluation in the same manner as in Example 1.

The observation of changes in extrusion pressure was started just after the feeding of the above molding composition. The extrusion pressure at the start of feeding was 38.4 MPa. In about 10 minutes after the start of feeding, the extrusion pressure began to drop and, at 16 minutes after the start of feeding, dropped to 37.3 MPa; from this point of time to 30 minutes after the start of feeding, the extrusion pressure changed little. The incidence of melt fracture decreased but the condition was such that melt fracture had not yet disappeared completely; therefore, at 30 minutes after the start of feeding, the masterbatch of the polymer processing additive was weighed and fed so that the FKM after admixture might amount to 750 ppm. At 21 minutes after the additional feeding (51 minutes after the initial feeding), the complete disappearance of melt fracture was observed and the extrusion pressure dropped to 36.5 MPa.

### Example 4

The fluoroelastomer used in Example 2 was ground on a cutter type grinding mill (Rapid R1528, product of Kawata Mfg Co.) to give roughly ground FKM with an average particle diameter of 1 to 3 mm. A 50-g portion of this roughly ground FKM and a solution of 0.025 g of KNO₃ in 2 ml of pure water were placed in a glass container (container attached to the mixer mentioned below), which was mounted on a mixer (MILLSER IFN-300DG; product of IWATANI); the mixture was blended up in the glass container for 1 minute, whereby an FKM/KNO₃ composition was obtained.

The thus-obtained KNO₃-treated FKM was placed in a mixer (R-60; product of TOYO SEIKI) and kneaded at 170°C for 10 minutes. The thus-obtained FKM/KNO₃ composition (added KNO₃ concentration: 500 ppm) was again ground on the cutter type grinding mill to give a finely divided FKM-based composition.
Using the finely divided FKM-based composition, a masterbatch of the polymer processing additive was prepared in the same manner as in the case of the KNO₃-treated FKM in Example 3.
The masterbatch of the polymer processing additive obtained was subjected to blown film extrudability evaluation in the same manner as in Example 1.
Just after feeding, the extrusion pressure was 38.0 MPa; in 15 minutes after feeding, melt fracture completely disappeared and the extrusion pressure dropped to 35.2 MPa.

### Example 5

The procedure for extrudability evaluation of Example 4 was followed in the same manner except that KNO₃ was added in an amount corresponding to 100 ppm of FKM. Melt fracture once disappeared in 15 minutes after feeding but again appeared at 20 minutes after feeding and completely disappeared at 30 minutes after feeding. The extrusion pressure dropped from 38.0 MPa to 35.6 MPa.

### Example 6

The procedure for extrudability evaluation of Example 4 was started in the same manner except that KNO₃ was added in an amount corresponding to 1000 ppm of FKM. When the content of FKM in the molding composition was 500 ppm, melt fracture did not disappear completely even after the lapse of 30 minutes and, when the amount of FKM was increased to 750 ppm and the evaluation procedure was continued, melt fracture completely disappeared in 28 minutes (after a total extrusion time of 58 minutes). The extrusion pressure lowered from 37.9 MPa to 36.4 MPa when the content of FKM in the molding composition was 500 ppm and, when the amount of FKM was increased to 750 ppm, it lowered to 36.0 MPa.

### Example 7

A masterbatch of the polymer processing additive was prepared and extrudability evaluation was made in the same manner as in Example 4 except that NaNo₃ was used in lieu of KNO₃.
When the FKM content in the molding composition was 500 ppm, melt fracture did not disappear completely even after 30 minutes; when the FKM content was increased to 750 ppm and the evaluation was continued, melt fracture disappeared completely in 19 minutes (after a total extrusion time of 49 minutes). When the FKM content was 500 ppm, the extrusion pressure decreased from 37.4 MPa to 36.3 MPa and, when the FKM content was increased to 750 ppm, it dropped to 35.5 MPa.

### Example 8

A masterbatch of the polymer processing additive was prepared and extrudability evaluation was performed in the same manner as in Example 4 except that K₂CO₃ was used in lieu of KNO₃.
When the FKM content in the molding composition was 500 ppm, melt fracture did not disappear completely even after 30 minutes; when the FKM content was increased to 750 ppm and the evaluation was continued, melt fracture disappeared completely in 30 minutes (after a total extrusion time of 60 minutes). When the FKM content was 500 ppm, the extrusion pressure decreased from 36.9 MPa to 36.0 MPa and, when the FKM content was increased to 750 ppm, it dropped to 35.9 MPa.

### Example 9

A masterbatch of the polymer processing additive was prepared and extrudability evaluation was performed in the same manner as in Example 4 except that Mg(NO₃)₂ was used in lieu of KNO₃.
When the FKM content in the molding composition was 500 ppm, melt fracture did not disappear completely even after 30 minutes; when the FKM content was increased to 750 ppm and the evaluation was continued, melt fracture disappeared completely in 24 minutes (after a total extrusion time of 54 minutes). When the FKM content was 500 ppm, the extrusion pressure decreased from 37.1 MPa to 36.0 MPa and, when the FKM content was increased to 750 ppm, it dropped to 35.4 MPa.

### Comparative Example 1

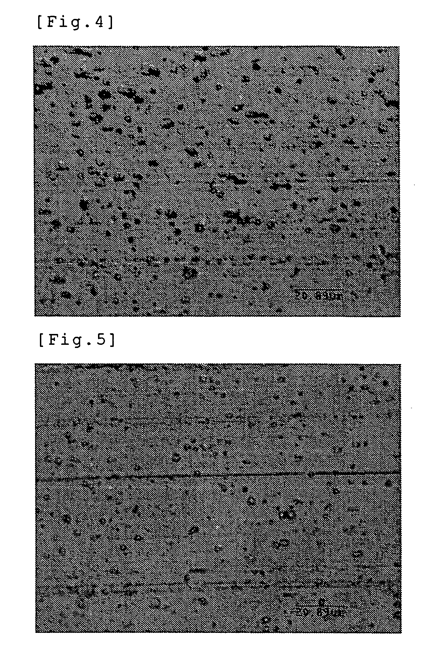

A masterbatch of the polymer processing additive was prepared in the same manner as in Example 1 except that the drying by extrusion was carried out without addition of KNO₃.
The fluoroelastomer in the masterbatch of the polymer processing additive obtained was found dispersed as particles with an average particle diameter of about 1 to 7 µm (cf. Fig. 4).

Using the above masterbatch of the polymer processing additive, the same extrusion procedure as in Example 1 was carried out.
From the point of time after the lapse of about 10 minutes following the start of feeding of the molding composition, the extrusion pressure began to decrease and the incidence of melt fracture began to lower. However, even after the lapse of 30 minutes following the start of feeding, melt fracture did not disappear and the extrusion pressure decreased from 38.3 MPa only to 37.0 MPa.

Since the condition was such that the incidence of melt fracture decreased but melt fracture did not disappear completely, the above masterbatch of the polymer processing additive was weighed in an amount sufficient for the FKM content after mixing to correspond to 1000 ppm and additionally fed at the time after the lapse of 35 minutes following the start of feeding of the molding composition. In 10 minutes after the additional feeding (at 45 minutes after the start of the initial feeding), complete disappearance of melt fracture could be confirmed and the extrusion pressure lowered to 36.3 MPa. The melt fracture measurement results are shown in Fig. 2.

It was found that the molding composition of Example 1 which contained the polymer processing additive heat-treated with KNO₃ added could lower the extrusion pressure to about 36 MPa at an addition level about half as compared with the molding composition of Comparative Example 1 which contained the polymer processing additive obtained without such heat treatment.

### Comparative Example 2

A masterbatch of the polymer processing additive was prepared in the same manner as in Example 2 except that the drying and grinding were carried out without adding KNO₃.
The fluoroelastomer in the masterbatch of the polymer processing additive obtained was found dispersed as particles with an average particle diameter of about 1 to 4 µm (Fig. 5).

Using the above masterbatch of the polymer processing additive, the same extrusion procedure as in Example 1 was carried out.
From the point of time after about 10 minutes following the start of feeding of the molding composition, the extrusion pressure began to lower and the incidence of melt fracture began to decrease. However, even after the lapse of 30 minutes following the start of the above feeding, melt fracture did not disappear; the extrusion pressure lowered from 38.3 MPa only to 37.3 MPa.

Further, it was found that whereas the molding composition of Example 2 which contained the polymer processing additive heat-treated with KNO₃ added could cause melt fracture to completely disappear in about 15 to 20 minutes after the start of feeding, an incidence of about 37% of melt fracture remained even after the lapse of 1 hour with the molding composition of Comparative Example 2 which contained the polymer processing additive obtained without such heat treatment.

### Comparative Example 3

A masterbatch of the polymer processing additive was prepared in the same manner as in Example 3 except that the KNO₃ treatment was omitted.
Using the masterbatch of the polymer processing additive obtained, the same extrusion procedure as in Example 1 was carried out.
At about 10 minutes after the start of feeding of the molding composition, the extrusion pressure began to lower and the incidence of melt fracture began to decrease. However, even after the lapse of 30 minutes following the start of feeding, melt fracture did not disappear; the extrusion pressure lowered from 38.2 MPa only to 37.4 MPa. Therefore, at the point of time after the lapse of 30 minutes following the start of feeding, the masterbatch of the polymer processing additive was weighed in an amount sufficient for the FKM to amount to 750 ppm of the molding composition after mixing and additionally fed, as in Example 3. Even at 30 minutes after the additional feeding (60 minutes after the start of feeding), melt fracture did not disappear completely; the extrusion pressure lowered only to 37.2 MPa.

### Comparative Example 4 (KNO₃-coated G701BP masterbatch)

The masterbatch of the polymer processing additive prepared in Comparative Example 1 was sprayed with a 20% aqueous solution of KNO₃ so that the amount of KNO₃ might correspond to 500 ppm of the amount of FKM. After tumbling, the whole was dried at 100°C for 1 hour. Using the thus-obtained KNO₃-coated G701BP masterbatch of the polymer processing additive, the same blown film extrusiion as in Example 1 was carried out.

From the point of time about 10 minutes after the start of feeding of the molding composition, the extrusion pressure began to lower and the incidence of melt fracture began to decrease. However, even after the lapse of 60 minutes following the start of the feeding, melt fracture did not disappear; the extrusion pressure lowered from 38.3 MPa only to 37.3 MPa.
The measurement results in each comparative example and each example are shown in Table 1 and Table 2, respectively.

.

**[Table 1]**

| | | Compar. Ex. 1 | | Compar. Ex. 2 | Compar. Ex. 3 | | Compar. Ex. 4 |
|---|---|---|---|---|---|---|---|
| Polymer processing additive | Amount of specific metal inorganic salt (based on amount of FKM) (ppm) | None | | None | None | | 500 |
| | Method of mixing | As in Example 1 | | As in Example 2 | As in Example 3 | | Spraying MB with KNO₃ |
| Molding composition | Amount of FKM (based on molding composition) (ppm) | 500 | →1000 | 500 | 500 | →750 | 500 |
| | Melt fracture disappearance (min) | 30 (Did not disappear) | 10 | 30 (Did not disappear) | 30 (Did not disappear) | 30 (Did not disappear) | 30 (Did not disappear) |
| Extrusion pressure (MPa) | | 38.3 →37.0 | →36.3 | 38.3 →37.3 | 38.2 →37.4 | →37.2 | 38.3 →37.3 |

**[Table 2]**

| | | Example 1 | Example 2 | Example 3 | | Example 4 | Example 5 | Example 6 | | Example 7 | | Example 8 | | Example 9 | |
|---|---|---|---|---|---|---|---|---|---|---|---|---|---|---|---|
| Polymer processing additive | Amount of specific metal inorganic salt (based on amount of FKM) (ppm) Method of mixing | KNO₃ 400 | KNO₃ 250 | KNO₃ 500 | | KNO₃ 500 | KNO₃ 100 | KNO₃ 1000 | | NaNO₃ 500 | | K₂CO₃ 500 | | Mg(NO₃)₂ 500 | |
| | | Drying by extrusion | Drying by extrusion | Spraying→MB | | Mixer →MB | Mixer →MB | Mixer→MB | | Mixer→MB | | Mixer→MB | | Mixer→MB | |
| Molding composition | Amount of FKM (based on molding composition) (ppm) | 500 | 500 | 500 | →750 | 500 | 500 | 500 | 750 | 500 | →750 | 500 | →750 | 500 | →750 |
| | Melt fracture disappearance (min) | 20 | 15 | 30 (Did not disappear) | 21 | 15 | 15→20 (Reappeared) →30 (Disappeared) | 30 (Did not disappear) | 28 | 30 (Did not disappear) | 19 | 30 (Did not disappear) | 30 | 30 (Did not disappear) | 24 |
| Extrusion pressure (MPa) | | 38.0 →36.0 | 38.2 →35.6 | 38.4 →37.3 | →36.5 | 38.0 →35.2 | 38.0 →35.6 | 37.9 →36.4 | →36.0 | 37.4 →36.3 | →35.5 | 36.9 →36.0 | →35.9 | 37.1 →36.0 | →35.4 |

### INDUSTRIAL APPLICABILITY

The polymer processing additive and the masterbatch of the polymer processing additive of the invention, which have the respective constitutions described hereinabove, are higher in moldability-improving effects, for example in reducing the extrusion pressure and inhibiting melt fracture, than the prior art ones. The molding composition of the invention, which comprises the above-mentioned polymer processing additive, is excellent in moldability, and the molded article of the invention, which is the product of molding of the above molding composition, is excellent in mechanical properties and other dynamic properties.

### BRIEF DESCRIPTION OF THE DRAWINGS

[Fig. 1] This is a photomicrograph taken under an optical microscope and showing the state of dispersion of the polymer processing additive in the masterbatch of the polymer processing additive in Example 1.
[Fig. 2] This shows the results of melt fracture measurement in Example 1 and Comparative Example 1.
[Fig. 3] This is a photomicrograph taken under an optical microscope and showing the state of dispersion of the polymer processing additive in the masterbatch of the polymer processing additive in Example 2.
[Fig. 4] This is a photomicrograph taken under an optical microscope and showing the state of dispersion of the polymer processing additive in the masterbatch of the polymer processing additive in Comparative Example 1.
[Fig. 5] This is a photomicrograph taken under an optical microscope and showing the state of dispersion of the polymer processing additive in the masterbatch of the polymer processing additive in Comparative Example 2.

## Claims

1. A polymer processing additive comprising a fluoroelastomer subjected to heat treatment with an alkali metal inorganic salt or alkaline earth metal inorganic salt added thereto.

2. The polymer processing additive according to Claim 1,
wherein the alkali metal inorganic salt or alkaline earth metal inorganic salt is an alkali metal nitrate.

3. The polymer processing additive according to Claim 2,
wherein the alkali metal nitrate is potassium nitrate.

4. The polymer processing additive according to Claim 1, 2 or 3,
wherein the heat treatment is carried out in the manner of heating and kneading.

5. The polymer processing additive according to Claim 1, 2, 3 or 4,
wherein the fluoroelastomer is a vinylidene fluoride/hexafluoropropylene copolymer.

6. A molding composition comprising a melt-processable resin and a polymer processing additive
wherein said polymer processing additive is the polymer processing additive according to Claim 1, 2, 3, 4 or 5.

7. The molding composition according to Claim 6,
wherein the content of the fluoroelastomer in the polymer processing additive is 0.001 to 5% by mass of the sum of the whole mass of the melt-processable resin and the mass of the fluoroelastomer.

8. The molding composition according to Claim 6 or 7,
wherein the melt-processable resin is a polyolefin resin.

9. A masterbatch of a polymer processing additive comprising a melt-processable resin (A) and the polymer processing additive according to Claim 1, 2, 3, 4 or 5.

10. The masterbatch of the polymer processing additive according to Claim 9,
wherein the content of the fluoroelastomer in the polymer processing additive is in excess of 0.5% by mass and not higher than 20% by mass of the sum of the mass of the melt-processable resin (A) and the mass of the fluoroelastomer.

11. The masterbatch of the polymer processing additive according to Claim 9 or 10,
wherein the melt-processable resin (A) is a polyolefin resin.

12. A molded article being the product of molding of the molding composition according to Claim 6, 7 or 8.
